# EUROPEAN PATENT APPLICATION

(11) **EP 1 760 976 A1**
(43) Date of publication of application: **07.03.2007**
(21) Application number: 06017984.3
(22) Date of filing: 29.08.2006
(51) Int. Cl.: H04L 12/66, H04L 12/46

(54) **Service data transfer method and apparatus**

(30) Priority: 29.08.2005 CN 200510036788
(71) Applicant: Huawei Technologies Co., Ltd., Longgang District, Shenzhen Guangdong 518129 (CN)
(72) Inventor: Cui, Xiuguo, Shenzhen Guangdong Province 518129 (CN)
(74) Representative: Dilg, Andreas

(57) **Abstract**

The present invention discloses a service data transfer method applicable in PSN, which includes: when sending service data, a sending end performing a rate adaptation on a service data stream depending on a constant rate container adaptive to the rate of the service rate stream, encapsulating the service data stream into data frames that may be transferred over the PSN, and then sending the data frames; and when receiving data, a receiving end decapsulating the data frames from the network, performing a rate de-adaptation on the constant rate containers in the data frames, and obtaining the transferred service data stream. The present invention further discloses a corresponding apparatus. The present invention may be utilized in PSNs to transfer PDH and SDH services, etc., with a reduced delay, and a clock performance which may meet the performance requirement of the SDH clock; therefore, it is easy to be generalized and with a low cost.

## Description

### Field of the Present invention

The present invention relates to Packet-Switched Network (PSN) technology field, especially to a method and an apparatus of service data transfer in PSN.

### Background of the Present invention

A Packet-Switched Network (PSN) usually includes an Internet Protocols (IP) network constructed with Ethernet switches (L2 and L3 switches) and routers, a Multi-Protocol Label Switching (MPLS) network constructed with MPLS switches, and an Asynchronous Transfer Mode (ATM) network, etc. As broadband data services develop rapidly, the conventional Synchronous Digital Hierarchy (SDH) mechanism based on time-division multiplexing (TDM) technology exhibits its drawbacks gradually, while networks based on packet switching are becoming a focal point for operators in construction of the new generation of bearer networks, thanks to its superior statistical bandwidth multiplexing feature.

Presently, PSNs bear not only packet services but also some other services, e.g., TDM services, which generally include SDH services and Plesiochronous Digital Hierarchy (PDH) services. The TDM services are usually borne on PSNs by means of Circuit Emulation Service (CES) technology in the prior art. In the so-called circuit emulation, a consecutive service data stream is segmented into packets to be transferred at a source and recovered from the packets at the destination. However, in a PSN, how to transfer the TDM service data at high-quality has been a technical difficulty.

In the prior art, the above non-packet bit stream of service data may be packed by byte (e.g., 64 bytes for a packet) and arranged in payload field in packets, and, after the overhead is processed, added with other packet headers and then transferred.

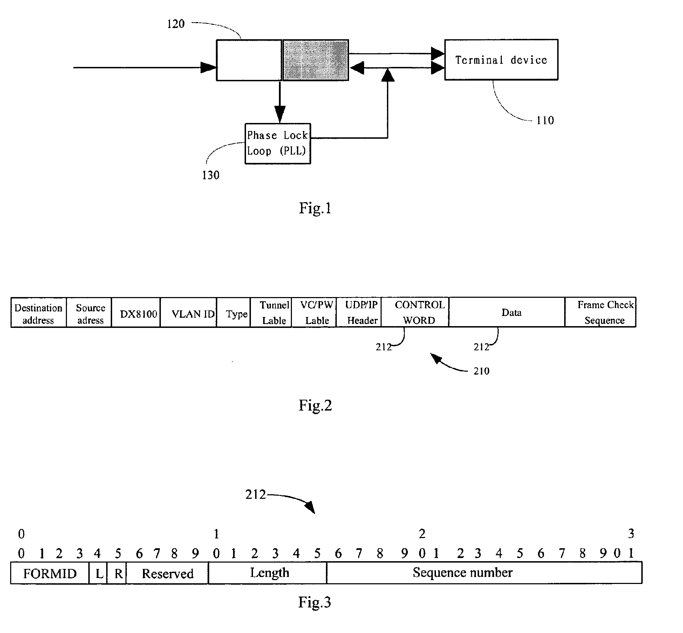

In this manner, the working principle of receiving service data at a receiving end is shown in Fig. 1.

The receiving end includes a terminal device 110 for receiving data, a First In First Out (FIFO) buffer 120 for buffering the data from the network, and a Phase Lock Loop (PLL) 130 for performing frequency control in accordance with the filling level of the FIFO buffer. When being received, the data transferred over the network enters into the FIFO buffer 120 first at a rate equal to the rate at which of the packets of the data arrive from the network. The transfer of the data from the FIFO buffer 120 to the terminal device 110 is controlled by a local clock. The local clock is created by the PLL 130; the clock output of the PLL 130 is controlled depending on the filling level of the FIFO buffer 120. If the FIFO buffer 120 is to be empty, the clock output from the PLL 130 will slow down; on the contrary, if the FIFO buffer 120 is to be full, the clock output from the PLL 130 will speed up.

Due to the fact that the packet transfer delay in PSN varies greatly, the filling level of the FIFO buffer 120 will be subjected to a long-term random fluctuation, causing a degraded quality of the local clock output from the PLL 130 and thereby a deteriorated clock for service transfer.

### Summary of the Invention

The present invention discloses a method and an apparatus of service data transfer, which provide a preferable clock performance.

The service data transfer method includes:

performing at a source a rate adaptation on a service data stream depending on a constant rate container adaptive to the rate of the service rate stream, encapsulating the service data stream into data frames that may be transferred over a Packet-Switched Network (PSN), and then sending the data frames; and

decapsulating at a destination the data frames from the PSN, performing a rate de-adaptation on the constant rate containers in the data frames, and obtaining the transferred service data stream.

The step of encapsulating the service data stream into data frames that may be transferred over the PSN and then sending the data frames includes: encapsulating the constant rate containers into the data frames that may be transferred over the PSN by adding a corresponding packet header to each of the constant rate containers, and then sending the data frames;

the step of decapsulating at a destination the data frames from the PSN includes: decapsulating by the destination the data frames from the network, and obtaining container data packets that transfers the service data stream; and

the step of performing a rate de-adaptation on the constant rate containers in the data frames and obtaining the transferred service data stream includes: outputting the container data packets from the network at randomly variable time intervals as container data packets at a uniform time interval with a clock that is synchronous with the sending rate of the constant rate containers of the sending end.

The step of performing at a source a rate adaptation on a service data stream depending on a constant rate container adaptive to the rate of the service rate stream includes: performing at the source the rate adaptation on the service data stream by bit adjustment, and encapsulating the service data stream into the constant rate containers adaptive to the service rate;

after the step of obtaining container data packets that transfers the service data stream, the method further includes the following steps: making a judgment on and processing disorder, loss, and valid data of the container data packets in the data frames; and

for the container data packets at a uniform time interval, adjusting the rate of the serial data output by bit adjustment in accordance with the volume of valid data, and recovering the transferred service data stream.

When the service data stream is encapsulated into the data frames that may be transferred over PSN, sequence numbers of the container data packets are disposed to indicate multi-frames and sub-frames thereof; and the processing disorder, loss, and valid data of the container data packets in the data frames is performed in accordance with the sequence numbers that indicate the multi-frames and the sub-frames thereof.

The packet header is at least one of Ethernet tag, Virtual Local Access Network (VLAN) tag, Multi-Protocol Label Switching (MPLS) tag, Pseudo Wire Emulation Edge to Edge (PWE3) tag, Internet Protocols (IP) tag, User Data Protocol (UDP) tag, and ATM cell header, or any combination thereof.

The service data may be PDH signals or SDH signals.

The PDH signals may include T1, T2, T3, E1, E2, E3 and E4 signals; the SDH signals may include STM-1 (OC-3), STM-4 (OC-12), STM-16 (OC-48), STM-64 (OC-192), and STM-256 (OC-768) signals; and the constant rate containers may include containers adaptive to the T1, T2, T3, E1, E2, E3, E4, STM-1 (OC-3), STM-4 (OC-12), STM-16 (OC-48), STM-64 (OC-192), or STM-256 (OC-768) respectively.

Accordingly, the service data transfer apparatus provided in the preferred embodiments of the present invention includes:

a rate adaptation data sending apparatus, disposed for a source to send data to perform rate adaptation on a service data stream depending on a constant rate container adaptive to the rate of the service data, encapsulate the service data stream into data frames that may be transferred over a Packet-Switched Network (PSN), and then send the data frames; and

a rate de-adaptation data receiving unit, disposed for a receiving end to decapsulate the data frames from the PSN, perform rate de-adaptation on the constant rate containers in the data frames, and obtain the transferred service data stream.

The present invention also discloses a rate adaptation data sending apparatus, including:

a container encapsulating apparatus, disposed for a source to perform a rate adaptation on a service data stream by bit adjustment, and encapsulate the service data stream into corresponding constant rate containers; and

a data frame encapsulating and sending apparatus, disposed to add corresponding packet headers to the containers, and encapsulate the containers into data frames that may be transferred over the PSN, and then send the data frames.

The container encapsulating apparatus utilizes sequence numbers of the containers to indicate multi-frames and sub-frames thereof when encapsulating the service data stream.

Each of the packet headers utilized by the data frame encapsulating and sending apparatus in encapsulating may be at least one of Ethernet tag, Virtual Local Access Network (VLAN) tag, Multi-Protocol Label Switching (MPLS) tag, Pseudo Wire Emulation Edge to Edge (PWE3) tag, Internet Protocols (IP) tag, User Data Protocol (UDP) tag, and ATM cell header, or any combination thereof.

The present invention further discloses a rate de-adaptation data receiving apparatus, including:

a data frame decapsulating apparatus, disposed to decapsulate data frames from a network, and obtain constant rate containers that transfer a service data stream; and

a container decapsulating and receiving apparatus, disposed to decapsulate the constant rate containers that transfer service data and recover the transferred service data stream.

The container decapsulating and receiving apparatus further performs a judgment and a processing on disorder, loss, and valid data of container data packets in the data frames from the network; outputs the container data packets from the network at randomly variable time intervals into container data packets at a uniform time interval by means of a clock that is synchronous with the sending rate of the constant rate containers of the sending end; and then for the container data packets at a uniform time interval, adjusts the rate of the serial data output by bit adjustment in accordance with the volume of valid data.

The container decapsulating and receiving apparatus judges and processes the disorder and the container loss of the container data packets in the data frames in accordance with the sequence numbers of the container data packets that indicate multi-frames and sub-frames thereof.

In the preferred embodiments of the present invention, a rate adaptation is performed on the service data by means of the constant rate containers adaptive to the rate of the service data before the service data stream is sent; and when receiving the data, the receiving end decapsulates the data frames from the PSN, and performs a rate de-adaptation on the the constant rate containers in the data frames to obtain the transferred service data stream; therefore, the preferred embodiments of the present invention has preferable clock performance.

In the preferred embodiments of the present invention, the receiving end outputs the consecutive container data packets from the network at randomly variable time intervals as consecutive container data packets at a uniform time interval with a clock that is synchronous to the sending frequency of the constant rate containers at the sending end, therefore improving clock performance for service data transfer. For example, when the method is applied to the transfer of PDH services, the clock performance may be improved up to the clock performance in case of PDH service transfer over an SDH, by transferring PDH services over a PSN. In addition, the method and the apparatus in the preferred embodiments of the present invention are easy to generalize and with a low cost.

### Brief Description of the Drawings

Fig.1 is a schematic diagram of service data receiving in the prior art;

Fig.2 shows the basic structure of an encapsulation of Time Division Multiplex over IP (TDMoIP) service data into an Ethernet frame to be transferred according to an embodiment of the present invention;

Fig.3 shows the structure of CONTROL WORD field in the frame structure shown in Fig.2;

Fig.4 is a schematic diagram of the transfer of PDH signals according to an embodiment of the present invention;

Fig.5 shows the C-2 frame structure for transferring an E1 signal according to an embodiment of the present invention;

Fig.6 shows the C-4 frame structure for transferring an E3 signal according to an embodiment of the present invention;

Fig.7 is a schematic diagram of the transfer of a PDH signal from a SDH port according to an embodiment of the present invention;

Fig.8 is a schematic diagram of the receiving of a PDH signal from a SDH port by the receiving end according to an embodiment of the present invention;

Fig.9 is a schematic structure diagram of a data frame for transferring service data over ATM according to an embodiment of the present invention;

Fig. 10 is a schematic diagram showing the service data transfer apparatus according to an embodiment of the present invention;

Fig.11 is a schematic diagram of the implementation of the service data transfer apparatus according to an embodiment of the present invention;

Fig.12 is a schematic diagram of receiving data by a container decapsulating apparatus according to an embodiment of the present invention.

### Detailed Description of the Embodiments

Preferred embodiments of the present invention are applied to service data transfer in a PSN; the service data may be of a TDM service or any other non-packet services. In the method of service data transfer provided in the preferred embodiments, a sending end performs a rate adaptation on a service data stream depending on a constant rate container adaptive to the rate of the service data, and encapsulates the service data stream into data frames which may be transferred over a PSN and sends the data frames; i.e., in the preferred embodiments of the present invention, constant rate containers with different rates are introduced to adapt the rates of the input service data streams to the system clock rates (in the preferred embodiments of the present invention, the data packet transferred in a container is referred to as a container data packet); accordingly, when receiving data, the receiving end decapsulates the data frames from the PSN, and then performs a rate de-adaptation on the constant rate containers in the data frames, so as to obtain the transferred service data stream; in that way, the service data transfer from a source to a destination is implemented.

It is noted that the procedure of service data transfer mentioned above is a circuit emulation solution that is based on the following presumption: the system clock of the source device that sends service data is synchronous with the system clock of the destination device that receives service data. For the system clock synchronization between the source device and the destination device, the synchronization information may be transferred over the physical layer of the network in which the source and the destination device reside, so as to implement the clock synchronization between the source and the destination; or the synchronization may be provided by means of an external clock source, such as Global Positioning System (GPS).

In the preferred embodiments of the present invention, when sending service data, the source that sends service data may perform a rate adaptation on a service data stream by bit adjustment, and encapsulates the service data stream into constant rate containers adaptive to the rate of the service data stream; in addition, to be transferred over the PSN, the constant rate containers are encapsulated into data frames that may be transferred over the PSN, with a corresponding packet header added to each of the containers before the encapsulation. There may be different packet headers for various networks; for example, the packet header may be a combination of one or more of Ethernet tag, Virtual Local Area Networks (VLAN) tag, MPLS tag, Pseudo Wire Emulation Edge-to-Edge (PWE3) tag, IP tag, User Datagram Protocol (UDP) tag, and ATM cell headers. The encapsulation process is a known technology and will not be further explained here.

When receiving service data, the destination for receiving data makes a judgment on disorder, loss, and valid data of container data packets from the network, and outputs the container data packets from the network at randomly variable time intervals into those at a uniform time interval with a clock that is synchronous with the sending rate of the constant rate container at the sending end; and then for the container data packets at uniform time interval, adjusts the rate of serial output data by bit adjustment in accordance with the volume of the valid data, so as to recover the transferred service data stream.

Hereunder the preferred embodiments of the present invention are explained in detail, by example of PDH signals; PDH signals is born over a PSN network, which is implemented with circuit emulation service technology.

Referring to Fig.2, it shows the basic structure of the encapsulation of TDMoIP (TDM 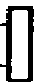 signals usually include PDH signals and SDH signals, and in this embodiment, only PDH signals are involved)) service data into an Ethernet frame as transferred according to an embodiment of the present invention; wherein, the Ethernet frame includes container data packet 210 for bearing the input signal stream. The container data packet 210 includes data field 211 and CONTROL WORD field 212.

Fig.3 shows a structure of CONTROL WORD field as shown in Fig.2. The CONTROL WORD field 212 includes:

FORM ID: indicating payload type; for example, among T1/E1/T3/E3, since any one of them may have frame structure or have no frame structure, and may support consistent bit rate timely service or may support variable bit rate timely service, FORM ID utilizes different values to identify the types accordingly.

L: Local signal invalid;

R: Remote Receiving invalid;

RES: Reserved;

LENGTH: indicating the length of CONTROL WORD and that of VALID DATA.

SEQUENCE NUMBER: sequence number of container data packet, incremented by 1 whenever a container data packet is sent. In the embodiment, the sequence number of container data packet is used to indicate the multi-frame and the sub-frame(s) thereof, to facilitate the receiving end to judge the loss of container data packets upon receiving service data, and to facilitate the receiving end to recover the sequence of the container data packets in case the container data packets are disordered.

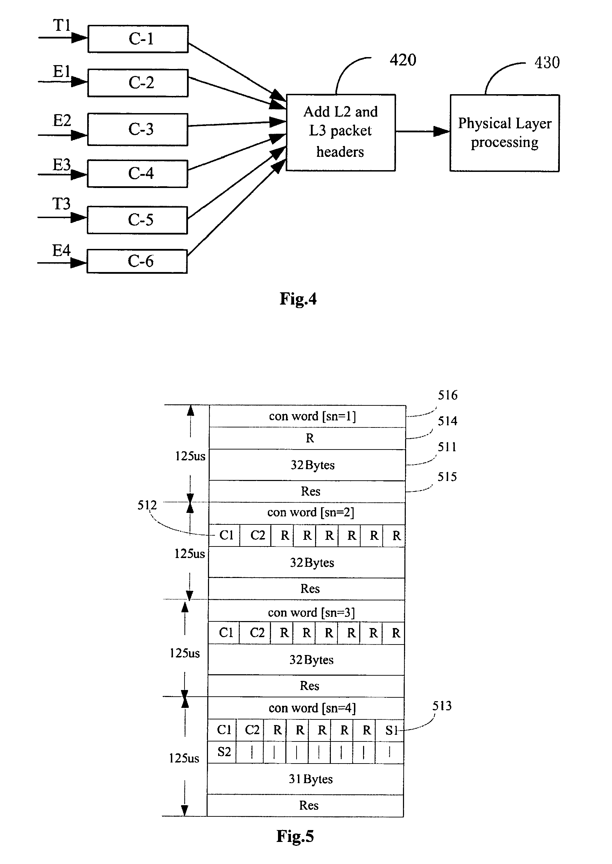

Since the packet transfer delay varies in a broad range, the timing information will be impaired severely in the PDH service transfer in the prior art; however, by encapsulating and packaging the service data stream by means of constant rate containers adaptive to the rates of the PDH service, the preferred embodiments of the present invention may improve significantly the clock performance. Referring to Fig.4, it is a schematic diagram of the transfer of PDH signals according to an embodiment of the present invention. The constant rate containers include containers C-1, C-2, C-3, C-4, C-5, and C-6 that are adaptive to rates of T1, T3, E1, E2, E3, and E4 respectively. After the service data are encapsulated into the constant rate containers, L2 and L3 packet headers are added to the containers (step 420), and then a physical layer is carried out (step 430).

Hereunder the method accordint to an embodiment of the present invention is described by example of PDH service data transfer. Supposing that the PDH signals are E1 signals. First, the container used to send E1 signal is determined (in this embodiment, the container is abbreviated as C-2); the E1 signal is encapsulated into C-2 containers before they are transferred.

Referring to Fig.5, in which the C-2 container may be at 8KHz rate and 38 bytes in size; each four frames constitute a multi-frame; each multi-frame consists of 1023 (32×3×8+31×8+7) data bits (I) 511, 6 justification control bits (C1, C2) 512, 2 justification opportunity bits (S1, S2) 513, 25 fixed stuff bits (R) 514, 4 reserved bytes (Res) 515, and 16 CONTROL WORD bytes 516. The phase of each sub-frames in the multi-frame may be identified with the Sequence Number (SN) in the CONTROL WORD field; for example, SN=1 indicates the first frame in the multi-frame, i.e., the first container data packet transferred in the multi-frame; SN=4 indicates the fourth frame in the multi-frame, i.e., the fourth container data packet transferred in the multi-frame; and SN=5 indicates the first frame in the next multi-frame, i.e., the first container data packet transferred in the next multi-frame, and so on.

S 1 and S2 are adjusted once every four frames; when C1C1C1=000, it indicates S 1 is a data bit. Similarly, C2 may control S2 bit in the same way. To avoid the effect of single bit error of C bit, whether to adjust or not may be judged with the rule of "3-bit majority decision".

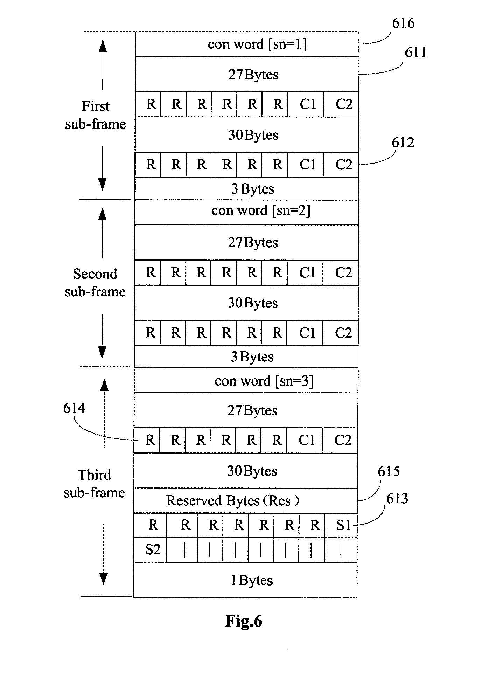

The preferred embodiments of the present invention are also applicable to other PDH signals; for example, Fig.6 shows the C-4 frame structure used to send E3 signal according to an embodiment of the present invention.

As shown in Fig.6, the C-4 container may be at 72KHz rate and 66 bytes in sizes; each three frames constitute a multi-frame; each multi-frame consists of 1431 (60×2×8+58×8+7) data bits (I) 611, 10 justification control bits (C1, C2) 612, 2 justification opportunity bits (S1, S2) 613, 37 fixed stuff bits (R) 614, 1 reserved byte (Res) 615, and 12 CONTROL WORD bytes 616. The phases of sub-frames in the multi-frame may be identified with the Sequence Number (SN) in the CONTROL WORD field; for example, SN=1 indicates the first frame in the multi-frame, i.e., the first container data packet transferred in the multi-frame; SN=3 indicates the third frame in the multi-frame, i.e., the third container data packet transferred in the multi-frame; and SN=4 indicates the first frame in the next multi-frame, i.e., the first container data packet transferred in the next multi-frame, and so on.

S1 and S2 are adjusted once every three frames; when C1C1C1C1C1=00000, it indicates S 1 is a data bit; similarly, C2 may control S2 bit in the same way. To avoid the effect of single bit error of C bit, whether to adjust or not may be judged with the rule of "5-bit majority decision".

For other PDH signals T1, T2, T3, E2, and E4, the containers for them function the same as the container for the above E1 essentially; containers adaptive to the T1, T2, T3, E2, and E4 signals may also be defined in the same way in the preferred embodiments of the present invention; of course, the frequency, format, and container size for the multi-frames and sub-frames may be different; therefore, those containers will not be further described here.

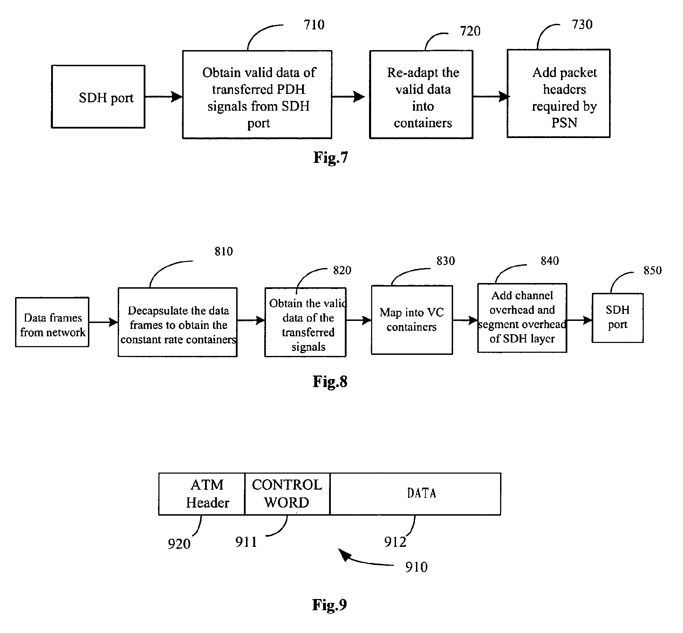

In addition, PDH signals from SDH port may also be transferred in the same way according to the preferred embodiments of the present invention. Referring to Fig.7, it shows a schematic diagram of the transfer of a PDH signal from a SDH port from a source in the PSN, according to an embodiment of the present invention. For implement the transfer, either of the following processing manners may be used:

The first processing manner: first, parsing the valid data of the transferred PDH signal from a C container from the SDH port (step 710); then, adapting the valid data to constant rate containers with the method provided in the preferred embodiments of the present invention (step 720); next, adding a packet header required in PSN to each of the constant rate containers and then encapsulating the assembled constant rate containers into a complete data frames to sent out (step 730).

The second processing manner: assembling and sending a Container (C) in a Virtual Container (VC) container from the SDH port at the source; for example, removing the fixed stuff bits from a C3 container that bears the E3 signal without processing of the justification control bits and the justification opportunity bits, and then loading the remaining bytes into one or more constant rate containers defined for transferring the PDH signal over PSN (the sending frequency of the constant rate container depends on the sending frequency of the C3 container from the SDH port). If the data in a C3 container is sent in three constant rate containers, the sending frequency of the constant rate containers will be three times of the sending frequency of the C3 container. Adding a packet header required in PSN to each of the constant rate containers and then sending them.

Fig.8 is a schematic diagram of mapping a transferred PDH signal to a SDH port by a destination in PSN according to an embodiment of the present invention. According to the method provided in the embodiment, the destination makes a judgment on disorder, loss, and valid data of the container data packets from the PSN, and outputs the container data packets from the network at randomly variable time intervals into container data packets at a uniform time interval with a clock that is synchronous with the sending rate of the constant rate container at the sending end (step 810); performs valid data de-adaptation on the container data packets to obtain the transferred valid data (step 820); and finally maps the valid data into SDH VCs (step 830), adds channel overhead, segment overhead, and other overheads of SDH layer (step 840), and then encapsulates the container data packets and sends them to a SDH port (step 850).

It is noted that: when processing the transferred PDH signal, if the constant rate container adaptive to the rate of the PDH signal is in a format substantially the same as the C container bearing the PDH signal at the SDH port (e.g., the C-2 and C-4 containers defined in the preferred embodiments of present invention), the destination doesn't need to perform valid data de-adaptation on the constant rate container, after it decapsulats the data frames from the network, obtains the container data packets from the transferred service data stream, makes a adjustment on disorder and loss of the container data packets in the data frames, and outputs the container data packets from the network at randomly variable time intervals into container data packets at a uniform time interval with a clock that is synchronous with the sending rate of the constant rate containers at the sending end; instead, the destination assembles the constant rate container data packets into the C containers at SDH port directly, adds channel overhead, segment overhead of SDH layer, and other overheads, and then encapsulates the container data packets to the SDH port and send them.

Referring to Fig.9, it is a schematic structure diagram of a data frame for transferring service data over ATM according to an embodiment of the present invention.

The method in the preferred embodiments of the present invention is also applicable to ATM networks. In this embodiment, the size of the container defined to transfer signals at different rates over ATM network is fixed to 48 bytes. Similarly, in a 48-byte container data packet 910, multi-frame and sub-frame indications may be carried in the CONTROL WORD field 911; and in the container data packet 910, justification control bits, justification opportunity bits, and data bits, etc. may be filled. For transfer over the network, the container data packets may be encapsulated into a data frame that may be transferred over the ATM network by being added with an ATM cell header 920.

After receiving the data frame, the receiving end removes the ATM cell header from the data frame, makes a judgment on disorder and packet loss of container data packets in accordance with the multi-frame and sub-frame indications carried in the CONTROL WORD field, and then adjusts the rate according to the justification control bits, finally sends the service data over an ATM network.

Hereunder another aspect of the present invention is described.

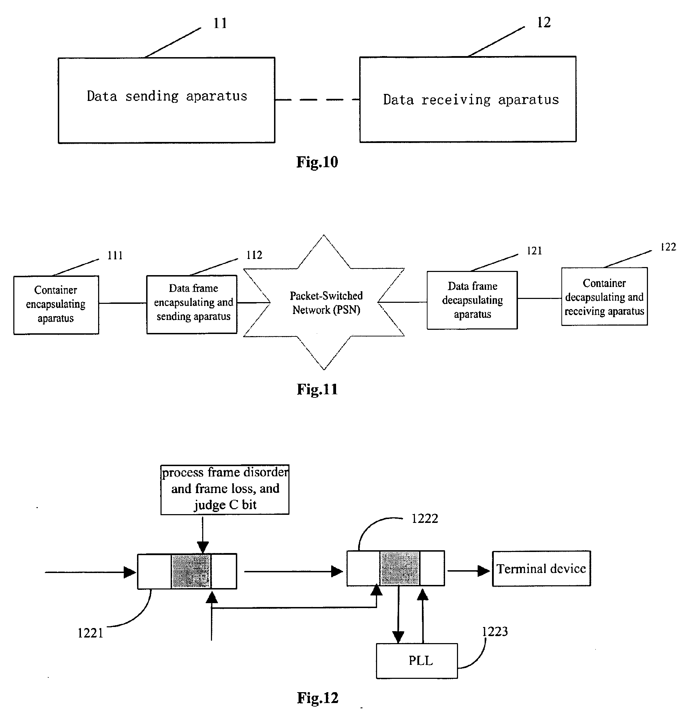

Fig.10 is a schematic construction diagram of the service data transfer apparatus according to an embodiment of the present invention; wherein the apparatus mainly includes:

a rate adaptation data sending apparatus 11, disposed for the sending end to perform a rate adaptation on a service data stream depending on a constant rate container adaptive to the rate of the service data, encapsulate the service data stream into data frames that may be transferred over PSN, and then send the data frames;

a rate de-adaptation data receiving unit 12, disposed for the receiving end to decapsulate the data frames from the PSN, and perform a rate de-adaptation on the constant rate containers in the data frames to obtain the transferred service data stream.

Hereunder the service data transfer apparatus will be detailed with reference to Fig. 11, a schematic diagram of the implementation of the service data transfer apparatus according to an embodiment of the present invention; wherein, the rate adaptation data sending apparatus 11 includes:

a container encapsulation apparatus 111, disposed to performing rate adaptation on a transferred service data stream by bit adjustment and encapsulate the service data stream into corresponding constant rate containers; the so-called "bit adjustment" refers to transfer the variation of a signal at the source to the destination quickly by bit adjustment in the constant rate containers; in the embodiment, different service data streams are to be transferred in different constant rate containers; the container encapsulation apparatus is used to encapsulate different service data streams into corresponding constant rate containers respectively;

a data frame encapsulating and sending apparatus 112, disposed to add a corresponding packet header to each of the containers and encapsulate the container into data frames that may be transferred over the PSN, and then send the data frames; in actual implementation, to be transferred over the PSN, the containers are added with corresponding packet headers, and are processed to be encapsulated into the data frames that may be transferred over PSN, that is, the data frame encapsulation and sending apparatus 112 in the embodiment adds corresponding packet headers to the containers respectively, so as to encapsulate the containers into the data frames that may be transferred over PSN, and then sends the data frames. As for the packet headers, reference may be made to those described above, and they will not be repeated here.

Accordingly, the rate de-adaptation receiving apparatus according to an embodiment of the present invention includes:

a data frame decapsulating apparatus 121, disposed to decapsulate the data frames from the network to obtain the constant rate containers that transfer the service data stream; in contrast with the receiving end, the data frame decapsulating apparatus in the embodiment performs decapsulates the data frames from the network to obtain the constant rate containers that transfer the service data stream;

a container decapsulating and receiving apparatus 122, disposed to decapsulate the constant rate containers transferring the service data, make a judgment on disorder, loss, and valid data of the container data packets in the data frames from the network, and output the container data packets from the network at randomly variable time intervals into container data packets at a uniform time interval with a clock synchronous with the sending rate of the constant rate containers of the sending end; for the container data packets at a uniform time interval, the rate of serial data output may be adjusted by bit adjustment in accordance with the volume of valid data, to recover the transferred service data stream.

With reference to the above description, in the embodiment of the present invention, the sequence numbers of the container data packets indicate multi-frames and sub-frames when the container performs a encapsulation; and the container decapsulating and receiving apparatus processes the disorder and the container loss of the container data packets in the data frames in accordance with the subsequence numbers of the container data packets in the data frames.

Hereunder the container decapsulating and receiving apparatus 122 is described in detail. Referring to Fig.12, it is a schematic diagram of the implementation of receiving data by the container decapsulating and receiving apparatus according to an embodiment of the present invention. In the embodiment, the container decapsulating and receiving apparatus include a packet FIFO buffer 1221, an S bit leakage FIFO buffer 1222, and a Phase Lock Loop (PLL) 1223; the procedure for processing the received data is as follows:

After the data frames from the network are decapsulated, the container data packets in the data frames are stored into the packet FIFO buffer 1221 first, the size of which depends on the maximum time interval between the data packets from the network; then, after being subjected to a container disorder, container loss, and valid data judgment and processing, the containers are read out with a clock synchronous with the clock of the source; the packet FIFO buffer 1221 is mainly used to change the randomly variable time intervals between two consecutive packets from the network to a uniform time interval. The transfer frequency of the packets at the source is synchronous with the read-out clock of the packet FIFO buffer 1221; the depth of the FIFO may be approximately calculated as follows:

Supposing that the sending frequency of packets at the source is 8KHz, the packet is 32 bytes in size, and the maximum time interval between two consecutive packets at the destination is t (depending on the quality of the transfer network), the FIFO buffer size may be configured as 8K×t×32×2 bytes; wherein, multiplying by "2" in the last is to prevent the FIFO buffer from overflowing in case of a burst of input packets. For example, the FIFO depth is 5120 bytes if t=10ms; wherein, "10ms" is approximately the delay resulted from recovery of the data stream at the node.

The data read out from the packet FIFO buffer 1221, which have been reordered against frame disorder and identified for frame loss, and S bit in accordance with the sequence numbers in the CONTROL WORD field, is written into the S bit leakage FIFO buffer 1222 in a more uniform rate. The PLL 1223 generates a FIFO reading clock in accordance with the filling level of the S bit leakage FIFO buffer; since the frequency at which variations occur on the S bit leakage FIFO buffer 1222 is very lower (at most 2-Bit adjustment per 500us), the clock may be recovered easily, which is right the fundamental principle of PDH transfer over SDH; as the result, the performance level of PDH signal transfer in this way is to the same as that of PDH signal transfer through a SDH network.

It is noted that the method and the apparatus in the above preferred embodiments of the present invention for transferring service data in constant rate containers with rate adaptation in the above embodiments are described with PDH signal transfer as an example; actually, in some embodiments, the method and the apparatus are also applicable for transferring other types of service data, especially service data transferred at low service data stream rates, as long as rate adaptation is performed depending on the constant rate containers adaptive to the service rates, and rate de-adaptation is performed on the constant rate containers when the service data are received. For example, in an embodiment, the present invention may also be applied to transfer Synchronous Digital Hierarchy signals, which may be STM-1 (OC-3), STM-4 (OC-12), STM-16 (OC-48), STM-64 (OC-192), and STM-256 (OC-768) signals; the constant rate containers include containers that are adaptive to STM-1 (OC-3), STM-4 (OC-12), STM-16 (OC-48), STM-64 (OC-192), and STM-256 (OC-768) respectively.

Though the present invention is described above in preferred embodiments, it is noted that those skilled in the art may make modifications and variations, without departing from the basic principle of the present invention; any of those modifications and variations shall fall into the protected scope of the present invention.

## Claims

1. A method of service data transfer, comprising:
performing at a source a rate adaptation on a service data stream depending on a constant rate container adaptive to the rate of the service rate stream, encapsulating the service data stream into data frames that may be transferred over a Packet-Switched Network (PSN), and then sending said data frames; and
decapsulating at a destination said data frames from the PSN, performing a rate de-adaptation on the constant rate containers in said data frames, and obtaining the transferred service data stream.

2. The method as in claim 1, wherein
the step of encapsulating the service data stream into data frames that may be transferred over the PSN and then sending said data frames comprises: encapsulating said constant rate containers into said data frames that may be transferred over the PSN by adding a corresponding packet header to each of said constant rate containers, and then sending said data frames;
the step of decapsulating at a destination said data frames from the PSN comprises: decapsulating by the destination said data frames from the network, and obtaining container data packets that transfers the service data stream; and
the step of performing a rate de-adaptation on said constant rate containers in said data frames and obtaining the transferred service data stream comprises:
outputting said container data packets from the network at randomly variable time intervals as container data packets at a uniform time interval with a clock that is synchronous with the sending rate of said constant rate containers of the sending end.

3. The method as in claim 2, wherein
the step of performing at a source a rate adaptation on a service data stream depending on a constant rate container adaptive to the rate of the service rate stream comprises: performing at the source the rate adaptation on the service data stream by bit adjustment, and
encapsulating the service data stream into said constant rate containers adaptive to said service rate;
after the step of obtaining container data packets that transfers the service data stream, said method further comprises the following steps:
making a judgment on and processing disorder, loss, and valid data of said container data packets in said data frames; and
for said container data packets at a uniform time interval, adjusting the rate of the serial data output by bit adjustment in accordance with the volume of valid data, and recovering the transferred service data stream.

4. The method as in claim 3, wherein when the service data stream is encapsulated into said data frames that may be transferred over PSN, sequence numbers of said container data packets are disposed to indicate multi-frames and sub-frames thereof; and said processing disorder, loss, and valid data of said container data packets in said data frames is performed in accordance with said sequence numbers that indicate the multi-frames and the sub-frames thereof.

5. The method as in claim 2, wherein, said packet header is at least one of Ethernet tag, Virtual Local Access Network (VLAN) tag, Multi-Protocol Label Switching (MPLS) tag, Pseudo Wire Emulation Edge to Edge (PWE3) tag, Internet Protocols (IP) tag, User Data Protocol (UDP) tag, and ATM cell header, or any combination thereof.

6. The method as in any one of claims 1-5, wherein, said service data are PDH signals or SDH signals.

7. The method as in claim 6, wherein said PDH signals comprise T1, T2, T3, E1, E2, E3 and E4 signals; said SDH signals comprise STM-1 (OC-3), STM-4 (OC-12), STM-16 (OC-48), STM-64 (OC-192), and STM-256 (OC-768) signals; said constant rate containers comprise containers adaptive to said T1, T2, T3, E1, E2, E3, E4, STM-1 (OC-3), STM-4 (OC-12), STM-16 (OC-48), STM-64 (OC-192), or STM-256 (OC-768) respectively.

8. A service data transfer apparatus, comprising
a rate adaptation data sending apparatus, disposed for a source to send data to perform rate adaptation on a service data stream depending on a constant rate container adaptive to the rate of the service data, encapsulate the service data stream into data frames that may be transferred over a Packet-Switched Network (PSN), and then send said data frames; and
a rate de-adaptation data receiving unit, disposed for a receiving end to decapsulate said data frames from the PSN, perform rate de-adaptation on the constant rate containers in said data frames, and obtain the transferred service data stream.

9. A rate adaptation data sending apparatus, comprising
a container encapsulating apparatus, disposed for a source to perform a rate adaptation on a service data stream by bit adjustment, and encapsulate the service data stream into corresponding constant rate containers; and
a data frame encapsulating and sending apparatus, disposed to add corresponding packet headers to said containers, and encapsulate said containers into data frames that may be transferred over the PSN, and then send said data frames.

10. The apparatus as in claim 9, wherein said container encapsulating apparatus utilizes sequence numbers of said containers to indicate multi-frames and sub-frames thereof when encapsulating the service data stream.

11. The apparatus as in claim 9, wherein each of said packet headers utilized by said data frame encapsulating and sending apparatus in encapsulating is at least one of Ethernet tag, Virtual Local Access Network (VLAN) tag, Multi-Protocol Label Switching (MPLS) tag, Pseudo Wire Emulation Edge to Edge (PWE3) tag, Internet Protocols (IP) tag, User Data Protocol (UDP) tag, and ATM cell header, or any combination thereof.

12. A rate de-adaptation data receiving apparatus, comprising
a data frame decapsulating apparatus, disposed to decapsulate data frames from a network, and obtain constant rate containers that transfer a service data stream; and
a container decapsulating and receiving apparatus, disposed to decapsulate the constant rate containers that transfer service data and recover the transferred service data stream.

13. The apparatus as in claim 12, wherein
said container decapsulating and receiving apparatus further performs a judgment and a processing on disorder, loss, and valid data of container data packets in said data frames from the network,
outputs said container data packets from the network at randomly variable time intervals into container data packets at a uniform time interval by means of a clock that is synchronous with the sending rate of said constant rate containers of the sending end,
and then for said container data packets at a uniform time interval, adjusts the rate of the serial data output by bit adjustment in accordance with the volume of valid data.

14. The apparatus as in claim 12, wherein said container decapsulating and receiving apparatus judges and processes the disorder and the container loss of the container data packets in said data frames in accordance with the sequence numbers of said container data packets that indicate multi-frames and sub-frames thereof.
